# EUROPEAN PATENT SPECIFICATION

(11) **EP 4 019 371 B1**
(45) Date of publication and mention of the grant of the patent: **18.12.2024**
(21) Application number: 21205006.6
(22) Date of filing: 27.10.2021
(51) Int. Cl.: B62D 15/02, G06Q 20/14, G05D 1/00, G06Q 20/30

(54) **VEHICLE CONTROL SYSTEM AND VEHICLE CONTROL METHOD**
FAHRZEUGSTEUERUNGSSYSTEM UND FAHRZEUGSTEUERUNGSVERFAHREN
SYSTÈME DE COMMANDE DE VÉHICULE ET PROCÉDÉ DE COMMANDE DE VÉHICULE

(30) Priority: 23.12.2020 JP 2020213868
(43) Date of publication of application: 29.06.2022
(73) Proprietor: TOYOTA JIDOSHA KABUSHIKI KAISHA, Toyota-shi Aichi 471-8571 (JP)
(72) Inventor: OKAMURA, Ryuji, Toyota-shi, 471-8571 (JP)
(74) Representative: J A Kemp LLP

(56) References cited:
- JP-A- 2020 087 261
- US-A1- 2019 016 583
- US-A1- 2020 174 496

## Description

### TECHNICAL FIELD

The present disclosure relates to a vehicle control system and a vehicle control method.

### BACKGROUND

US 2019/016583 describes that, upon determination to refuel a platoon of vehicles, a respective fuel inlet location is identified for each of the vehicles in the platoon. Based on the fuel inlet locations, a refueling location is selected. The platoon is navigated to the refueling location US 2019/016583 A1 shows in particular a vehicle control system that controls a platoon travel in which a plurality of vehicles travel in a platoon, wherein the plurality of vehicles include a leading vehicle that is an autonomous driving vehicle and a following vehicle that follows immediately after the leading vehicle or follows the leading vehicle via one or more vehicles, and the following vehicle is permitted to park in a parking frame that exists in a range of detection performed by an external sensor mounted on the leading vehicle and configured to detect a surrounding environment of the leading vehicle. JP 2020 087261 A aims to provide a vehicle control device capable of platoon-driving with a higher degree of freedom while suppressing a communication cost. A vehicle control device comprises a management device and a subscriber identification information setting unit that can switch between valid and invalid of SIM information of the vehicle. A plurality of vehicles are grouped into a leading vehicle in which SIM information is set to a valid state in advance and subordinate vehicles in which SIM information is set to an invalid state in advance. When the group formed by the leading vehicle and the subordinate vehicles is the main platoon group, the subscriber identification information setting unit sets the SIM information to the valid state in a separated vehicle when separating at least one subordinate vehicle from the main platoon group as the separated vehicle. US 2020/174496 A describes a control apparatus that controls a plurality of vehicles performing platoon travelling. Each of the vehicles is provided with an inter-vehicle communication apparatus that performs an inter-vehicle communication with another vehicle included in a column of the platoon travelling. At least some of the vehicles is provided with an external communication apparatus that performs an external communication based on own identification information given by a telecommunication company. The control apparatus is configured to control respective vehicles such that the number of vehicles capable of simultaneously performing the external communication is less than the number of vehicles included in the column. A vehicle control system that controls a platoon travel in which a plurality of vehicles travel in a platoon is known. As this kind of technology, Japanese Unexamined Patent Publication No. 2020-095506 discloses a platoon travel management system. In the platoon travel management system described in Japanese Unexamined Patent Publication No. 2020-095506, when a designated platoon arrives at a parking area through a platoon travel by autonomous driving, the designated platoon is caused to park according to a set parking mode.

### SUMMARY

In the vehicle control system described above, for example, when a following vehicle that follows a leading vehicle is a partially autonomous driving vehicle, an external sensor that detects surrounding environments may not be mounted on the following vehicle, or functions of the external sensor may be limited. In this case, it may be difficult for the following vehicle to park in a target parking frame while ensuring sufficient safety.

One aspect of the present invention has an object of providing a vehicle control system and a vehicle control method capable of causing a following vehicle to park in a target parking frame while ensuring sufficient safety.

A vehicle control system according to an aspect of the present invention is a vehicle control system as defined in appended claim 1.

A vehicle control method according to an aspect of the present invention is a vehicle control method as defined in appended claim 3.

In the vehicle control system and the vehicle control method, it is possible to cause the following vehicle to park by setting the parking frame existing in the range of detection performed by the external sensor mounted on the leading vehicle as the target parking frame. Therefore, even if the external sensor is not mounted on the following vehicle or the function of the external sensor mounted on the following vehicle is limited, by using the result of detection performed by the external sensor of the leading vehicle, the surrounding environment relating to the target parking frame can be grasped. Therefore, it is possible to cause the following vehicle to park in the target parking frame while ensuring the sufficient safety.

It is possible to reliably realize the parking of the following vehicle in the target parking frame while ensuring the sufficient safety.

In the vehicle control system according to an embodiment, an i-th vehicle, which is the i-th vehicle (i is an integer equal to or greater than 2) from the front among the plurality of vehicles that travel in a platoon, may be parked next, and determination is made as to whether the following vehicle is the i-th vehicle or not before the leading vehicle arrives at a destination, and a travel order of the plurality of vehicles that travel in a platoon may be changed such that the following vehicle becomes the i-th vehicle if the following vehicle is not the i-th vehicle. The vehicle control method according to an embodiment may include causing an i-th vehicle, which is the i-th vehicle (i is an integer equal to or greater than 2) from the front among the plurality of vehicles that travel in a platoon, to park next, determining whether the following vehicle is the i-th vehicle or not before the leading vehicle arrives at a destination, and changing a travel order of the plurality of vehicles that travel in a platoon such that the following vehicle becomes the i-th vehicle if the following vehicle is not the i-th vehicle. As a result, it is possible to cause the permission targeted following vehicle to reliably park next.

According to various aspects and an embodiment of the present invention, it is possible to provide a vehicle control system and a vehicle control method capable of causing a following vehicle to park in a target parking frame while ensuring sufficient safety.

### BRIEF DESCRIPTION OF THE DRAWINGS

FIG. 1 is a block diagram illustrating a configuration of a vehicle control system according to an embodiment.
FIG. 2 is a bird's-eye view illustrating an example of processing by the vehicle control system according to the embodiment.
FIG. 3 is a flowchart illustrating an example of the vehicle control method according to the embodiment.

### DETAILED DESCRIPTION

Hereinafter, an embodiment will be described with reference to the drawings. In the following description, the same reference numerals will be used for the same or equivalent elements, and the descriptions thereof will be omitted.

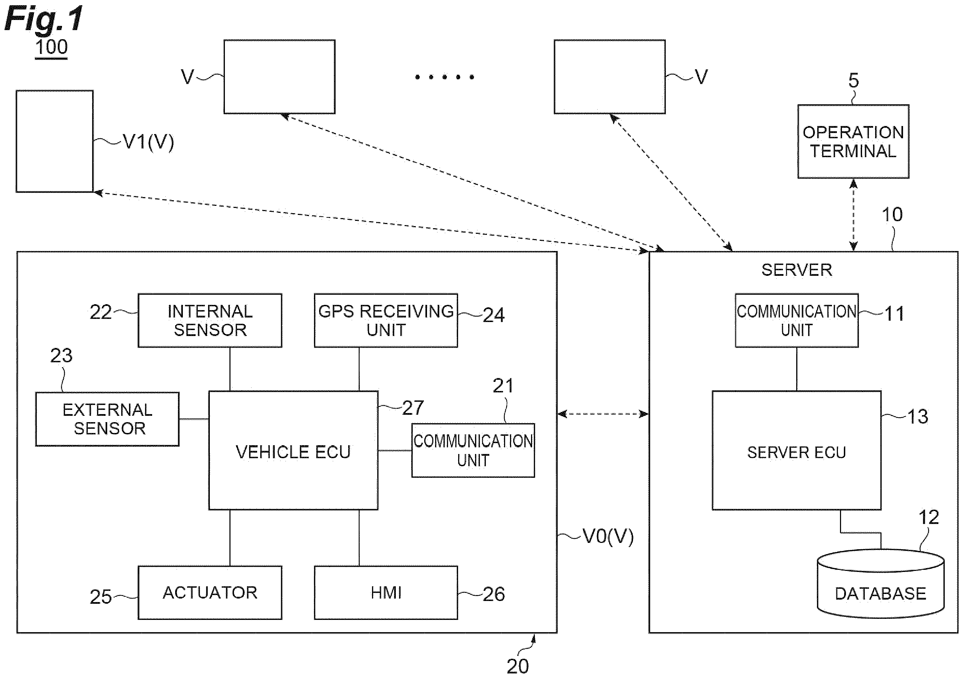

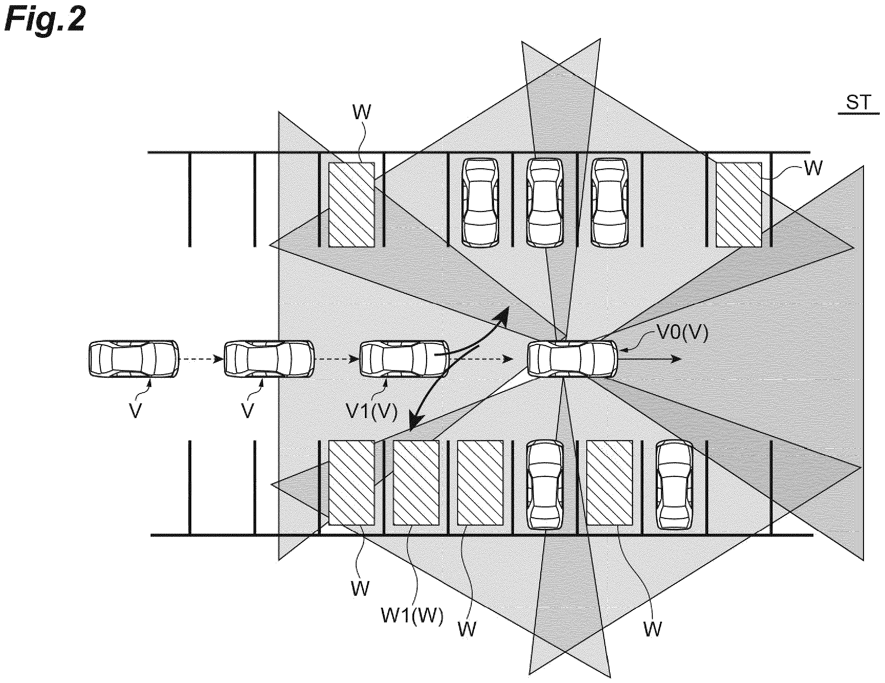

FIG. 1 is a block diagram illustrating a configuration of a vehicle control system 100. FIG. 2 is a bird's-eye view illustrating an example of processing by the vehicle control system 100. As illustrated in FIG. 1 and FIG. 2, a vehicle control system 100 according to the embodiment controls a platoon travel in which a plurality of vehicles V travel in a platoon. In the platoon travel, a plurality of vehicles V travel side by side in a row to be sequentially connected. The plurality of vehicles V that travel in a platoon includes a leading vehicle V0 that travels at a top and a following vehicle V1 that follows the leading vehicle V0.

The leading vehicle V0 is an autonomous driving vehicle capable of autonomous driving. The autonomous driving vehicle is a vehicle that does not require a driving operation by a driver and is capable of autonomous travel control that causes the vehicle V to autonomously travel. The vehicles V other than the leading vehicle V0 are partially autonomous driving vehicles. The partially autonomous driving vehicle does not require a driving operation by a driver, but is a vehicle in which the external sensor 23 described later is not mounted on the vehicle or the function is limited. The partially autonomous driving vehicle is, for example, a vehicle whose autonomous driving level is lower than that of the leading vehicle V0. The partially autonomous driving vehicle is, for example, a vehicle that performs following travel using vehicle-to-vehicle communication and road-to-vehicle communication. The following vehicle V1 may be a vehicle V that follows immediately after the leading vehicle va, or may be a vehicle V that follows the leading vehicle via one or more vehicles V. The vehicle V that follows immediately after the leading vehicle V0 is the vehicle V second from the front among the plurality of vehicles V that travel in a platoon.

In the present embodiment, the vehicle control system 100 causes the plurality of vehicles V to autonomously travel in a platoon to go around the plurality of parking lots with each of the plurality of parking lots as the destination, and causes a part of the plurality of vehicles V to autonomously park in each parking lot. The plurality of vehicles V that travel in a platoon are unmanned travel vehicles. For example, the vehicle V is an automobile for car-sharing or the like, and a parking lot is a car-sharing station.

The vehicle control system 100 includes an operation terminal 5 and a server 10. The operation terminal 5 configures, for example, an interface for inputting and outputting information to and from the user. The operation terminal 5 communicates with the server 10. The operation terminal 5 receives various operation inputs. The operation terminal 5 transmits the information relating to the received operation input to the server 10.

The operation terminal 5 receives, for example, the operation inputs for starting, stopping, and ending the platoon travel, and transmits the related information to the server 10. The operation terminal 5 receives the operation inputs relating to, for example, a plurality of destinations such as a transit point or an arrival point by the platoon travel, an order of parking of the plurality of vehicles V that travel in a platoon, and a parking frame targeted by each of the plurality of vehicles V that travel in a platoon (hereinafter, referred to as a "target parking frame"), and the like, and transmits the related information to the server 10. As the operation terminal 5, for example, a PC, a smartphone, or a tablet is used. The parking frame is, for example, within a frame marked out by white lines. The parking frame is a place having a space for the vehicle V to park and is arranged in a layout in which the vehicle V can park.

The server 10 includes a communication unit 11, a database 12, and a server electronic control unit (ECU) 13. The communication unit 11 communicates with the operation terminal 5 and with the plurality of vehicles V. The communication unit 11 inputs and outputs various information to and from the database 12 and the server ECU 13. The database 12 stores various information input from the communication unit 11. The database 12 stores the information relating to, for example, the plurality of destinations such as the transit point or the arrival point in the platoon travel, an order of parking of the plurality of vehicles V that travel in a platoon, and the target parking frame for each of the plurality of vehicles V that travel in a platoon (hereinafter, referred to as "platoon travel information). Map data is stored in the database 12 in advance.

The server ECU 13 is an electronic control unit including a central processing unit (CPU), a read only memory (ROM), and a random access memory (RAM), and the like. In the server ECU 13, for example, various functions are realized by loading the program stored in the ROM into the RAM and executing the program loaded in the RAM in the CPU. The server ECU 13 may be configured with a plurality of electronic control units.

The server ECU 13 generates a platoon travel route, which is a route for the platoon travel, based on various information and map data input from the communication unit 11. The generated platoon travel route includes, for example, a plurality of destinations. The server ECU 13 transmits the platoon travel information and the information on the platoon travel route to each vehicle V via the communication unit 11.

The leading vehicle V0 which is the autonomous driving vehicle includes a communication unit 21, an internal sensor 22, an external sensor 23, a GPS receiving unit 24, an actuator 25, an HMI 26, and a vehicle ECU 27. The communication unit 21 communicates with the server 10. The communication unit 21 inputs and outputs various information to and from the vehicle ECU 27.

The internal sensor 22 is a detection device that detects a travel state of the leading vehicle V0. The internal sensor 22 is mounted on the leading vehicle V0. The internal sensor 22 includes a vehicle speed sensor, an acceleration sensor, and a yaw rate sensor. The vehicle speed sensor is a detector that detects a speed of the leading vehicle V0. As the vehicle speed sensor, for example, a wheel speed sensor is used, which is provided on wheels of the leading vehicle V0 or on a drive shaft that rotates integrally with the wheels and detects the rotation speed of the wheels. The vehicle speed sensor transmits the detected vehicle speed information (wheel speed information) to the vehicle ECU 27.

The acceleration sensor is a detector that detects the acceleration of the leading vehicle V0. The acceleration sensor includes, for example, a longitudinal acceleration sensor that detects a acceleration in the longitudinal direction of the leading vehicle va, and a lateral acceleration sensor that detects a lateral acceleration of the leading vehicle V0. The acceleration sensor transmits, for example, the acceleration information of the leading vehicle V0 to the vehicle ECU 27. The yaw rate sensor is a detector that detects a yaw rate (rotation angular velocity) around the vertical axis of the center of gravity of the leading vehicle V0. As the yaw rate sensor, for example, a gyro sensor can be used. The yaw rate sensor transmits the detected yaw rate information of the leading vehicle V0 to the vehicle ECU 27.

The external sensor 23 is a detection device that detects the surrounding environment of the leading vehicle V0. The external sensor 23 is mounted on the leading vehicle V0. The external sensor 23 includes cameras and a radar sensor. A camera is provided on the back side of the windshield of the leading vehicle V0, for example, and images the front of the leading vehicle V0. A camera may be provided on the back surface and the side surface of the leading vehicle V0. The cameras transmit the imaging information around the leading vehicle V0 to the vehicle ECU 27. The camera may be a monocular camera or a stereo camera. The stereo camera has two imaging units arranged to reproduce binocular parallax.

The radar sensor is a detection device that detects an obstacle around the leading vehicle V0 using radio waves (for example, millimeter waves) or light. The radar sensor includes, for example, a millimeter-wave radar or a light detection and ranging (LIDAR). The radar sensor transmits radio waves or light to the periphery of the leading vehicle va, and detects the obstacle by receiving the radio waves or light reflected from the obstacle. The radar sensor transmits the detected obstacle information to the vehicle ECU 27. In FIG. 2, the range of detection performed by the external sensor 23 of the leading vehicle V0 is illustrated by a gray area around the leading vehicle V0.

The GPS receiving unit 24 measures a position of the leading vehicle V0 (for example, the latitude and longitude of the leading vehicle Va) by receiving signals from three or more GPS satellites. The GPS receiving unit 24 transmits the measured position information of the leading vehicle V0 to the vehicle ECU 27. Instead of or in addition to the acquisition of the position information by the GPS receiving unit 24, the position information of the leading vehicle V0 may be acquired by a simultaneous localization and mapping (SLAM) technology using the result of detection performed by the external sensor 23 and the map data.

The actuator 25 is a device that performs the platoon travel of the leading vehicle V0. The actuator 25 includes at least an engine actuator, a brake actuator, and a steering actuator. The engine actuator controls the driving force of the leading vehicle V0 by changing the amount of air supplied to the engine (for example, changing the throttle opening degree) according to the control signal from the vehicle ECU 27. If the leading vehicle V0 is a Hybrid Electric Vehicle or a Battery Electric Vehicle, the engine actuator controls the driving force of the motor as a power source. The brake actuator controls a braking force applied to the wheels of the leading vehicle V0 by controlling a brake system according to the control signal from the vehicle ECU 27. As the braking system, for example, a hydraulic braking system can be used. The steering actuator controls a drive of an assist motor that controls a steering torque in an electric power steering system according to the control signal from the vehicle ECU 27. As a result, the steering actuator controls the steering torque of the leading vehicle V0.

The HMI 26 is an interface for inputting and outputting information to and from the driver. The HMI 26 includes, for example, a display unit (display) and a speaker of the leading vehicle V0. The HMI 26 performs the output of the image on the display and outputs of the audio from the speaker according to the control signal from the vehicle ECU 27. The HMI 26 may include a head up display HUD).

The vehicle ECU 27 is an electronic control unit mounted on the leading vehicle V0. The vehicle ECU 27 is an electronic control unit including a CPU, ROM, RAM, and the like. In the vehicle ECU 27, for example, various functions are realized by loading the program stored in the ROM into the RAM and executing the program loaded in the RAM by the CPU. The vehicle ECU 27 may be configured with a plurality of electronic control units.

The vehicle ECU 27 generates a travel plan that realizes the autonomous driving for the leading vehicle V0 to travel in a platoon. Specifically, the vehicle ECU 27 generates the travel plan that realizes the autonomous driving around a plurality of destinations by the platoon travel, based on the travel state of the leading vehicle V0, the surrounding environment of the leading vehicle V0, the position information of the leading vehicle V0, the map data, the platoon travel information and the information on the platoon travel route. The vehicle ECU 27 performs the autonomous driving by controlling the actuator 25 according to the travel plan. The vehicle ECU 27 generates the travel plan and performs the autonomous driving by a known method. The vehicle ECU 27 transmits the position information of the leading vehicle V0 to the server 10 via the communication unit 21. The vehicle ECU 27 transmits the information relating to the result of detection by the external sensor 23 to the server 10 via the communication unit 21.

The vehicles V other than the leading vehicle V0 are configured in the same manner as the leading vehicle V0, except that the external sensor 23 is not mounted on the vehicle or the function of the external sensor 23 is limited. A fact that the function of the external sensor 23 is limited means that, for example, the detection accuracy is low and/or the range of detection is narrow compared with the external sensor 23 of the leading vehicle V0 which is an autonomous driving vehicle. The vehicles V other than the leading vehicle V0 may acquire the surrounding environment using the vehicle-to-vehicle communication and the road-to-vehicle communication.

Next, the main part of the vehicle control system 100 in the present embodiment will be described.

In the vehicle control system 100, the server ECU 13 permits the following vehicle V1 to park in the parking frame W existing in the range of detection performed by the external sensor 23 of the leading vehicle V0. Specifically, the server ECU 13 determines whether or not the parking frame W exists in the range of detection performed by the external sensor 23 of the leading vehicle V0 based on the result of detection performed by the external sensor 23 and transmitted from the vehicle ECU 27 of the leading vehicle V0. When the parking frame W exists, the server ECU 13 permits the following vehicle V1 to park in the parking frame W. The following vehicle V1 for which the permission of parking is targeted is also hereinafter referred to as a "permission targeted following vehicle V1".

When the permission targeted following vehicle V1 is permitted to park, the server ECU 13 determines whether or not a target parking frame W1 for the permission targeted following vehicle V1 is included in the parking frame W existing in the range of detection performed by the external sensor 23. When the target parking frame is included in the parking frame W existing in the range of detection performed by the external sensor 23, the server ECU 13 transmits a signal indicating the parking permission and the information relating to the result of detection performed by the external sensor 23 to the permission targeted following vehicle V1 via the communication unit 11.

When receiving the signal indicating the parking permission, in the permission targeted following vehicle V1, the vehicle ECU 27 performs the autonomous parking driving to autonomously park in the target parking frame by controlling the actuator 25 based on the travel state of the permission targeted following vehicle V1, the result of detection performed by the external sensor 23 of the leading vehicle va, the position information of the permission targeted following vehicle V1, the map data, and the platoon travel information.

On the other hand, when the parking frame W does not exist in the range of detection performed by the external sensor 23 of the leading vehicle V0, or when the target parking frame W1 for the permission targeted following vehicle V1 is not included in the parking frame W existing in the range of detection, the server ECU 13 calculates the position of the leading vehicle V0 where the target parking frame W1 for the permission targeted following vehicle V1 is included in the range of detection. The server ECU 13 transmits a movement command to move to the calculated position of the leading vehicle V0 to the leading vehicle V0 via the communication unit 11. When receiving the movement command, in the leading vehicle va, the vehicle ECU 27 performs the autonomous driving to move the leading vehicle V0 to a position where the target parking frame for the permission targeted following vehicle V1 is included in the range of detection by controlling the actuator 25 based on the movement command.

Among a plurality of vehicles V that travel in a platoon, the server ECU 13 causes the i-th vehicle to park next, which is the i-th vehicle V from the front (here, i is an integer equal to or greater than 2). The server ECU 13 determines whether the permission targeted following vehicle V1 is the i-th vehicle or not before the leading vehicle V0 arrives at the destination. The server ECU 13 determines whether the permission targeted following vehicle V1 is the i-th vehicle (here, i = 2) or not before the leading vehicle V0 arrives at the station ST illustrated in FIG. 2, for example. When the permission targeted following vehicle V1 is not the i-th vehicle, the server ECU 13 transmits a change command to change the travel order of the plurality of vehicles V that travel in a platoon to the plurality of vehicles V via the communication unit 11 such that the permission targeted following vehicle V1 becomes the i-th vehicle. When receiving the change command, in the plurality of vehicles V, the vehicle ECU 27 performs the autonomous driving to make the permission targeted following vehicle V1 be the i-th vehicle by controlling the actuator 25 based on the change command.

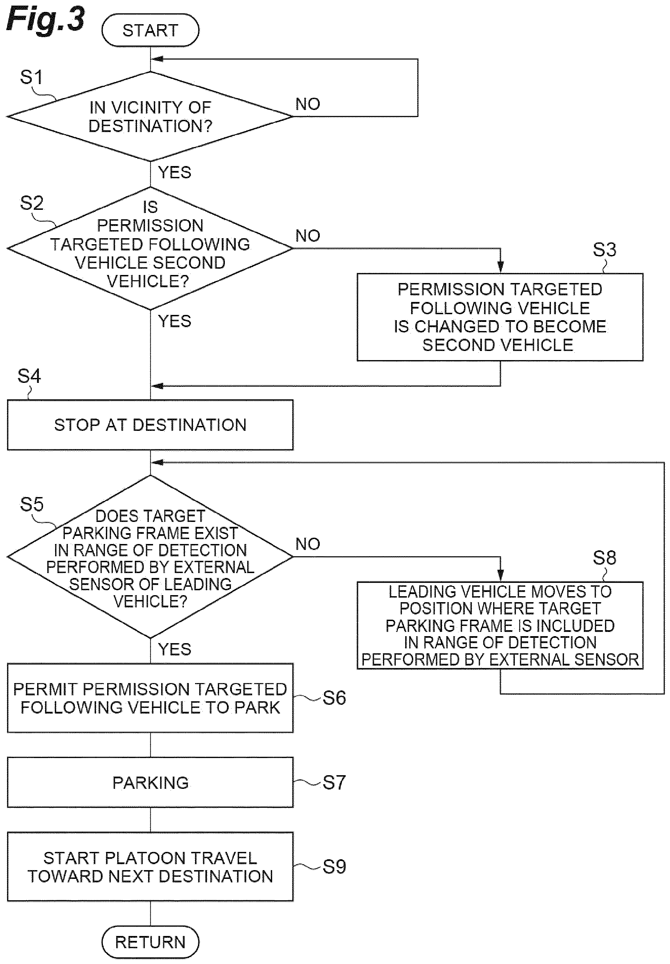

Next, an example of a vehicle control method implemented by the vehicle control system 100 will be described with reference to the flowchart in FIG. 3.

In the vehicle control system 100, for example, when an operation input to start the platoon travel is performed via the operation terminal 5, the following processing is executed. First, the server ECU 13 determines whether or not the leading vehicle V0 exists in the vicinity of the first destination based on the platoon travel information and the position information of the leading vehicle V0 (Step S1). The vicinity means, for example, within a predetermined distance set in advance from the destination.

If Yes in Step S1 above, the server ECU 13 determines whether or not the permission targeted following vehicle V1 is the second vehicle in the travel order of the vehicles V to be parked next (that is, the second vehicle) based on the position information and the platoon travel information of all the vehicles V (Step S2). If No in Step S1 above, the process returns to the determination in Step S1.

If No in Step S2 above, the server ECU 13 transmits a change command to change the travel order of the current second vehicle and the permission targeted following vehicle V1 to the current second vehicle and the permission targeted following vehicle V1 such that the permission targeted following vehicle V1 becomes the second vehicle. As a result, the permission targeted following vehicle V1 is changed to become the second vehicle (Step S3). If Yes in Step S2 above or after Step S3 above, when the leading vehicle V0 arrives at the destination, the leading vehicle V0 and other vehicles V following the leading vehicle V0 stop (Step S4).

The server ECU 13 determines whether or not the target parking frame for the permission targeted following vehicle V1 exists in the range of detection performed by the external sensor 23 of the leading vehicle V0 based on the result of detection performed by the external sensor 23 and the platoon travel information of the leading vehicle V0 (Step S5). That is, in Step S5 above, whether or not the parking frame W exists in the range of detection performed by the external sensor 23 of the leading vehicle V0 is determined, and if it is determined that the parking frame W exists, whether or not the parking frame W is the target parking frame for the permission targeted following vehicle V1 is determined.

If Yes in Step S5 above, the server ECU 13 permits the permission targeted following vehicle V1 to park in the target parking frame (Step S6). The server ECU 13 transmits the signal indicating the parking permission and the information relating to the result of detection performed by the external sensor 23 to the permission targeted following vehicle V1. In the permission targeted following vehicle V1, the vehicle ECU 27 performs the autonomous parking driving to autonomously park in the target parking frame (Step S7).

If No in Step S5 above, the server ECU 13 calculates the position of the leading vehicle V0 where the target parking frame for the permission targeted following vehicle V1 is included in the range of detection performed by the external sensor 23 of the leading vehicle V0 based on the map data and the platoon travel information. The server ECU 13 transmits a movement command to move to the calculated position of the leading vehicle V0 to the leading vehicle V0. As a result, in the leading vehicle va, the vehicle ECU 27 move to the position where the target parking frame for the permission targeted following vehicle V1 is included in the range of detection performed by the external sensor 23 by controlling the actuator 25 based on the movement command (Step S8). After Step S8 above, the process returns to the determination in Step S5 above.

After Step S7 above, the remaining vehicles V starts the platoon travel toward the next destination (Step S9). After Step S9 above, the process proceeds to Step S1 for determining whether or not the leading vehicle V0 exists in the vicinity of the next destination. For example, if the next destination does not exist after Step S9, or if operation inputs to stop or end the platoon travel are performed via the operation terminal 5, the process ends. In addition, when parking is completed for all the vehicles V other than the leading vehicle va, the leading vehicle V0 autonomously parks in the target parking frame by a known method, and then, the process ends.

As described above, in the present embodiment, it is possible to cause the permission targeted following vehicle V1 to park by setting the parking frame W existing in the range of detection performed by the external sensor 23 of the leading vehicle V0 as the target parking frame W1. Therefore, even if the external sensor 23 is not mounted on the permission targeted following vehicle V1 or the function of the external sensor 23 mounted on the permission targeted following vehicle V1 is limited, by using the result of detection performed by the external sensor 23 of the leading vehicle va, the surrounding environment relating to the target parking frame W1 can be grasped. Therefore, it is possible to cause the permission targeted following vehicle V1 to park in the target parking frame W1 while ensuring the sufficient safety.

In the present embodiment, if the target parking frame W1 for the permission targeted following vehicle V1 does not exist in the range of detection performed by the external sensor 23 of the leading vehicle va, the leading vehicle V0 is moved to the position where the target parking frame W1 is included in the range of detection performed by the external sensor 23. As a result, it is possible to reliably realize the parking of the permission targeted following vehicle V1 in the target parking frame W1 while ensuring the sufficient safety.

In the present embodiment, among the plurality of vehicles V that travel in a platoon, the i-th vehicle, which is the i-th vehicle V from the front (i is an integer equal to or greater than 2), is parked next. Whether the permission targeted following vehicle V1 is the i-th vehicle or not is determined before the leading vehicle V0 arrives at the destination. If the permission targeted following vehicle V1 is not the i-th vehicle, the travel order of the plurality of vehicles V that travel in a platoon is changed such that the permission targeted following vehicle V1 becomes the i-th vehicle. As a result, it is possible to cause the permission targeted following vehicle V1 to reliably park next.

Various exemplary embodiments have been described above, however, not limited to the exemplary embodiments described above, various omissions, substitutions, and changes may be made.

In the embodiment described above, the method of realizing the platoon travel of a plurality of vehicles V is not particularly limited, but for example, various known methods of traveling to follow the front vehicle V can be used. In the embodiment described above, all the vehicles V other than the leading vehicle V0 are partially autonomous driving vehicles, but at least a part of the vehicles V other than the leading vehicle V0 may be the autonomous driving vehicles.

In the embodiment described above, all or a part of the above-described functions of the operation terminal 5 and server 10 may be realized by other than the server 10, but for example, may be realized by a plurality of computers. In the embodiment described above, all or a part of the above-described functions of the operation terminal 5 and server 10 may be realized by the vehicle ECU 27 of the leading vehicle V0 or may be realized by the vehicle ECU 27 of a plurality of vehicles V.

In the embodiment described above, the second vehicle V is parked next, but any of the third and the subsequent vehicles V may be parked next. For example, when the number of vehicles to travel in a platoon is n, the n-th vehicle V may be parked next. In this case, the last vehicle V among the plurality of vehicles V that travel in a platoon can be parked first.

In the embodiment described above, in some cases, without prohibiting to park in the parking frames other than the parking frame W existing in the range of detection performed by the external sensor 23 of leading vehicle va, parking in the parking frames other than the parking frame W existing in the range of detection performed by the external sensor 23 of the leading vehicle V0 may be permitted.

## Claims

1. A vehicle control system (100) that controls a platoon travel in which a plurality of vehicles travel in a platoon,
wherein the plurality of vehicles include a leading vehicle (V0) that is an autonomous driving vehicle (V) and a following vehicle that follows immediately after the leading vehicle (V0) or follows the leading vehicle (V0) via one or more vehicles (V),
when a parking frame exists in a range of detection performed by an external sensor (23) mounted on the leading vehicle (V0) and configured to detect a surrounding environment of the leading vehicle (V0), the following vehicle (V) is permitted to park in the parking frame and when parking is completed for the following vehicle (V), the leading vehicle (V0) autonomously parks in the parking frame, and
when a parking frame does not exist in the range of detection performed by the external sensor (23), when the leading vehicle (V0) arrives at a destination, the leading vehicle (V0) and following vehicle (V0) stop and the leading vehicle (V0) is moved to a position where a target parking frame for the following vehicle (V) is included in the range of detection performed by the external sensor (23).

2. The vehicle control system according to claim 1,
wherein an i-th vehicle, which is the i-th vehicle, i being an integer equal to or greater than 2, from the front among the plurality of vehicles that travel in a platoon, is parked next, and
determination is made as to whether the following vehicle (V) to be parked is the i-th vehicle or not before the leading vehicle (V0) arrives at the destination, and a travel order of the plurality of vehicles that travel in a platoon is changed such that the following vehicle (V) becomes the i-th vehicle if the following vehicle (V) to be parked is not the i-th vehicle.

3. A vehicle control method for controlling a platoon travel in which a plurality of vehicles travel in a platoon,
wherein the plurality of vehicles include a leading vehicle (V0) that is an autonomous driving vehicle and a following vehicle (V) that follows immediately after the leading vehicle (V0) or follows the leading vehicle (V0) via one or more vehicles, and
the method comprising:
when a parking frame exists in a range of detection performed by an external sensor (23) mounted on the leading vehicle (V0) and configured to detect a surrounding environment of the leading vehicle (V0), permitting the following vehicle (V) to park in the parking frame and when parking is completed for the following vehicle (V), autonomously parking the leading vehicle (V0) in the parking frame,
when a parking frame does not exist in the range of detection performed by the external sensor (23), when the leading vehicle (V0) arrives at a destination, stopping the leading vehicle (V0) and the following vehicle (V0) and moving the leading vehicle (V0) to a position where a target parking frame for the following vehicle (V) is included in the range of detection performed by the external sensor (23).

4. The vehicle control method according to claim 3, further comprising:
causing an i-th vehicle, which is the i-th vehicle, i being an integer equal to or greater than 2, from the front among the plurality of vehicles that travel in a platoon, to park next;
determining whether the following vehicle (V) to be parked is the i-th vehicle or not before the leading vehicle (V0) arrives at the destination; and
changing a travel order of the plurality of vehicles that travel in a platoon such that the following vehicle (V) becomes the i-th vehicle if the following vehicle (V) to be parked is not the i-th vehicle.

## Patentansprüche

1. Fahrzeugsteuersystem (100), das eine Kolonnenfahrt steuert, bei der eine Mehrzahl von Fahrzeugen in einer Kolonne fahren,
wobei die Mehrzahl von Fahrzeugen ein führendes Fahrzeug (V0), das ein autonom fahrendes Fahrzeug (V) ist, und ein nachfolgendes Fahrzeug beinhaltet, das unmittelbar nach dem führenden Fahrzeug (V0) folgt oder über ein oder mehrere Fahrzeuge (V) dem führenden Fahrzeug (V0) folgt,
wenn ein Parkrahmen in einem Erkennungsbereich vorhanden ist, der von einem externen Sensor (23) durchgeführt wird, der an dem führenden Fahrzeug (V0) montiert ist und dazu konfiguriert ist, eine Umgebung des führenden Fahrzeugs (V0) zu erkennen, es dem nachfolgenden Fahrzeug (V) gestattet wird, in dem Parkrahmen zu parken, und wenn das Parken für das nachfolgende Fahrzeug (V) abgeschlossen ist, das führende Fahrzeug (V0) autonom in dem Parkrahmen parkt, und
wenn in dem Erkennungsbereich, der durch den externen Sensor (23) durchgeführt wird, kein Parkrahmen vorhanden ist, wenn das führende Fahrzeug (V0) an einem Ziel ankommt, das führende Fahrzeug (V0) und das nachfolgende Fahrzeug (V0) anhalten und das führende Fahrzeug (V0) in eine Position bewegt wird, in der ein Zielparkrahmen für das nachfolgende Fahrzeug (V) in dem Erkennungsbereich, der durch den externen Sensor (23) durchgeführt wird, enthalten ist.

2. Fahrzeugsteuersystem nach Anspruch 1,
wobei ein i. Fahrzeug, das das i. Fahrzeug ist, wobei i eine ganze Zahl gleich oder größer als 2 ist, aus der Mehrzahl von Fahrzeugen, die in einer Kolonne fahren, als nächstes geparkt wird, und
eine Bestimmung durchgeführt wird, ob das nachfolgende Fahrzeug (V), das geparkt werden soll, das i. Fahrzeug ist oder nicht, bevor das führende Fahrzeug (V0) an dem Ziel ankommt, und eine Fahrreihenfolge der Mehrzahl von Fahrzeugen, die in einer Kolonne fahren, derart geändert wird, dass das nachfolgende Fahrzeug (V) das i. Fahrzeug wird, wenn das nachfolgende Fahrzeug (V), das geparkt werden soll, nicht das i. Fahrzeug ist.

3. Fahrzeugsteuerverfahren zum Steuern einer Kolonnenfahrt, bei der eine Mehrzahl von Fahrzeugen in einer Kolonne fahren,
wobei die Mehrzahl von Fahrzeugen ein führendes Fahrzeug (V0), das ein autonom fahrendes Fahrzeug (V) ist, und ein nachfolgendes Fahrzeug (V) beinhaltet, das unmittelbar nach dem führenden Fahrzeug (V0) folgt oder über ein oder mehrere Fahrzeuge dem führenden Fahrzeug (V0) folgt, und
das Verfahren umfasst:
wenn ein Parkrahmen in einem Erkennungsbereich vorhanden ist, der von einem externen Sensor (23) durchgeführt wird, der an dem führenden Fahrzeug (V0) montiert ist und dazu konfiguriert ist, eine Umgebung des führenden Fahrzeugs (V0) zu erkennen, Gestatten, dass das nachfolgende Fahrzeug (V) in dem Parkrahmen parkt, und wenn das wenn das Parken für das nachfolgende Fahrzeug (V) abgeschlossen ist, autonomes Parken des führenden Fahrzeugs (V0) in dem Parkrahmen, und
wenn in dem Erkennungsbereich, der durch den externen Sensor (23) durchgeführt wird, kein Parkrahmen vorhanden ist, wenn das führende Fahrzeug (V0) an einem Ziel ankommt, Anhalten des führenden Fahrzeugs (V0) und des nachfolgenden Fahrzeugs (V0) und Bewegen des führenden Fahrzeugs (V0) in eine Position, in der ein Zielparkrahmen für das nachfolgende Fahrzeug (V) in dem Erkennungsbereich, der durch den externen Sensor (23) durchgeführt wird, enthalten ist.

4. Fahrzeugsteuerverfahren nach Anspruch 3, ferner umfassend:
Bewirken, dass ein i. Fahrzeug, das das i. Fahrzeug ist, wobei i eine ganze Zahl gleich oder größer als 2 ist, von der Spitze unter der Mehrzahl von Fahrzeugen, die in einer Kolonne fahren, als nächstes parkt;
Bestimmen, ob das nachfolgende Fahrzeug (V), das geparkt werden soll, das i. Fahrzeug ist oder nicht, bevor das führende Fahrzeug (V0) an dem Ziel ankommt; und
Ändern einer Fahrreihenfolge der Mehrzahl von Fahrzeugen, die in einer Kolonne fahren, sodass das nachfolgende Fahrzeug (V) das i. Fahrzeug wird, wenn das nachfolgende Fahrzeug (V), das geparkt werden soll, nicht das i. Fahrzeug ist.

## Revendications

1. Système de commande de véhicule (100) qui commande une circulation en peloton dans laquelle une pluralité de véhicules circulent en peloton,
dans lequel la pluralité de véhicules inclut un véhicule de tête (V0) qui est un véhicule à conduite autonome (V) et un véhicule suiveur qui suit immédiatement le véhicule de tête (V0) ou suit le véhicule de tête (V0) par l'intermédiaire d'un ou de plusieurs véhicules (V),
lorsqu'il existe un cadre de stationnement dans une portée de détection réalisée par un capteur externe (23) monté sur le véhicule de tête (V0) et configuré pour détecter un milieu environnant du véhicule de tête (V0), le véhicule suiveur (V) est autorisé à se garer dans le cadre de stationnement et lorsque le stationnement est terminé pour le véhicule suiveur (V), le véhicule de tête (V0) se gare de manière autonome dans le cadre de stationnement, et
lorsqu'il n'existe pas de cadre de stationnement dans la portée de détection réalisée par le capteur externe (23), lorsque le véhicule de tête (V0) arrive à une destination, le véhicule de tête (V0) et le véhicule suiveur (V0) s'arrêtent et le véhicule de tête (V0) est déplacé jusqu'à une position où un cadre de stationnement cible pour le véhicule suiveur (V) est inclus dans la portée de détection réalisée par le capteur externe (23).

2. Système de commande de véhicule selon la revendication 1,
dans lequel un i-ème véhicule, qui est le i-ème véhicule, i étant un nombre entier supérieur ou égal à 2, à partir de l'avant parmi la pluralité de véhicules qui circulent en peloton, est ensuite garé, et
une détermination est faite pour déterminer si le véhicule suiveur (V) à garer est le i-ème véhicule ou non avant que le véhicule de tête (V0) n'arrive à la destination, et un ordre de circulation de la pluralité de véhicules qui circulent en peloton est modifié de sorte que le véhicule suiveur (V) devient le i-ème véhicule si le véhicule suiveur (V) à garer n'est pas le i-ème véhicule.

3. Procédé de commande de véhicule pour commander une circulation en peloton dans laquelle une pluralité de véhicules circulent en peloton,
dans lequel la pluralité de véhicules inclut un véhicule de tête (V0) qui est un véhicule à conduite autonome et un véhicule suiveur (V) qui suit immédiatement le véhicule de tête (V0) ou suit le véhicule de tête (V0) par l'intermédiaire d'un ou de plusieurs véhicules, et
le procédé comprenant :
lorsqu'il existe un cadre de stationnement dans une portée de détection réalisée par un capteur externe (23) monté sur le véhicule de tête (V0) et configuré pour détecter un milieu environnant du véhicule de tête (V0), l'autorisation du véhicule suiveur (V) de se garer dans le cadre de stationnement et lorsque le stationnement est terminé pour le véhicule suiveur (V), le stationnement autonome du véhicule de tête (V0) dans le cadre de stationnement,
lorsqu'il n'existe pas de cadre de stationnement dans la portée de détection réalisée par le capteur externe (23), lorsque le véhicule de tête (V0) arrive à une destination, l'arrêt du véhicule de tête (V0) et le véhicule suiveur (V0) et le déplacement du véhicule de tête (V0) jusqu'à une position où un cadre de stationnement cible pour le véhicule suiveur (V) est inclus dans la portée de détection réalisée par le capteur externe (23).

4. Procédé de commande de véhicule selon la revendication 3, comprenant en outre :
le fait d'amener un i-ème véhicule, qui est le i-ème véhicule, i étant un nombre entier supérieur ou égal à 2, à partir de l'avant parmi la pluralité de véhicules qui circulent en peloton, à ensuite se garer ;
le fait de déterminer si le véhicule suiveur (V) à garer est le i-ème véhicule ou non avant que le véhicule de tête (V0) n'arrive à la destination ; et
la modification d'un ordre de circulation de la pluralité de véhicules qui circulent en peloton, de sorte que le véhicule suiveur (V) devienne le i-ème véhicule si le véhicule suiveur (V) à garer n'est pas le i-ème véhicule.
